# EUROPÄISCHE PATENTSCHRIFT

(11) **EP 3 595 238 B1**
(45) Veröffentlichungstag und Bekanntmachung des Hinweises auf die Patenterteilung: **06.04.2022**
(21) Anmeldenummer: 19191049.6
(22) Anmeldetag: 14.12.2017
(51) Int. Cl.: H04L 9/16, G06F 21/57

(54) **NACHLADEN KRYPTOGRAPHISCHER PROGRAMMINSTRUKTIONEN**
RELOADING OF CRYPTOGRAPHIC PROGRAM INSTRUCTIONS
CHARGEMENT D'INSTRUCTIONS DE PROGRAMME CRYPTOGRAPHIQUE

(30) Priorität: 16.12.2016 DE 102016225360
(43) Veröffentlichungstag der Anmeldung: 15.01.2020
(62) Teilanmeldung aus: 17207441.1
(73) Patentinhaber: Bundesdruckerei GmbH, 10969 Berlin (DE)
(72) Erfinder: SEEGEBARTH, Christian, 20249 Hamburg (DE); DIETRICH, Frank, 12437 Berlin (DE)
(74) Vertreter: Richardt Patentanwälte PartG mbB

(56) Entgegenhaltungen:
- WO-A1-2016/020640
- WO-A1-2016/191176
- DE-A1-102014 220 616
- Anonymous: "Power-line communication - Wikipedia", , 7. März 2016 (2016-03-07), XP055642204, Gefunden im Internet: URL:https://en.wikipedia.org/w/index.php?t itle=Power-line_communication&oldid=708852 481 [gefunden am 2019-11-13]

## Beschreibung

Die Erfindung betrifft ein Verfahren zum Nachladen kryptographischer Programminstruktionen in ein Sicherheitsmodul, welches sich im Wirkbetrieb befindet, sowie ein entsprechendes Sicherheitsmodul, ein das Sicherheitsmodul umfassendes elektronisches System und ein verteiltes System, welches sowohl das elektronische System mit dem Sicherheitsmodul als auch ein Computersystem zur Wartung des Sicherheitsmoduls umfasst.

Die vorliegende Patentanmeldung ist eine Teilanmeldung zur Stammanmeldung EP 17 207 441.1 - 1218, deren Offenbarungsgehalt vollumfänglich zum Gegenstand der vorliegenden Teilanmeldung gemacht wird.

Heutzutage werden in zunehmender Weise mehr und mehr Gegenstände des Alltags durch "intelligente Gegenstände" (auch "smart devices" genannt) ersetzt, welche informationstechnisch aufgerüstete und dazu konfiguriert sind selbst Informationen zu verarbeiten. Diese intelligenten Gegenstände sind mit datenverarbeitender Hardware ausgerüstet, wie etwa einem eingebauten Mikrocontroller, Kommunikationsschnittstellen und/oder Sensoren, sodass sie Daten erfassen, speichern und/oder untereinander austauschen können. Ein Schlagwort für diese Entwicklung ist beispielsweise das sogenannte Internet der Dinge (abgekürzt auch IoT von "internet of things").

Bei der Realisierung des Internets der Dinge sind wesentliche Anforderungen an die in den entsprechenden Geräten verwendete Hardware eine hohe Zuverlässigkeit und ein geringer Wartungsaufwand, da Wartungsarbeiten an einer großen Anzahl von Geräten, die mitunter räumlich weit auseinander verteilt und/oder schwer zugänglich sind, zu einem erheblichen Arbeits- und Kostenaufwand führen können.

Eine weitere wesentliche Anforderung ist die Informationssicherheit, sowohl zum Zwecke des Datenschutzes als auch zum Schutz vor unerlaubten Eingriffen in den Betrieb der entsprechenden Geräte. In einer Netzwerkumgebung können sich intelligente Geräte beispielsweise mit Zertifikaten authentisieren und eine sichere Kommunikation mittels Verschlüsselungstechniken realisiert. Hierzu werden beispielsweise Sicherheitsmodule verwendet, welche entsprechende kryptographische Routinen zur Verfügung stellen.

Um möglichst viele Gegenstände mit entsprechender Hardware zur Realisierung des Internets der Dinge ausrüsten zu können, müssen jedoch die Anschaffungskosten niedrig sein. Hierzu bieten sich integrierte Lösungen wie zum Beispiel ein System-on-a-Chip an.

Kryptographische Algorithmen, welche von entsprechenden Sicherheitsmodulen zur kryptographischen Sicherung der intelligenten Geräte verwendet werden, drohen allerdings wie alle kryptographischen Algorithmen durch Fortschritte bei der Entwicklung effizienter Entschlüsselungsstrategien und Algorithmen im Laufe der Zeit zu ermüden und an Sicherheit zu verlieren, sodass es irgendwann geboten erscheint diese durch neuere und damit sicherere Algorithmus zu ersetzt. Es ist zu erwarten, dass sich dieses Problem in Zukunft durch die Entwicklung immer leistungsfähigerer Computer, insbesondere durch mögliche Durchbrüche im Bereich von Quantencomputern, weiter verschärfen wird. So können etwa die derzeit am weitesten verbreiteten Public-Key-Verfahren wie etwa RSA oder Verfahren, die auf dem diskreten Logarithmus in endlichen Körpern beruhen, z. B. DSA oder Diffie-Hellman, ebenso wie Elliptische-Kurven-Kryptographie durch Quantencomputer theoretisch in Polynomialzeit gebrochen werden und somit ihre Sicherheit verlieren.

Für kryptographische Algorithmen von Sicherheitsmodulen, die solche intelligenten Geräte schützen sollen, ist jedoch kein Austausch vorgesehen. Die kryptographischen Algorithmen sind vielmehr über eine ROM-Maske fest verdrahtet in die Sicherheitsmodule eingebracht.

Im Falle von preisgünstigen Konsumgütern stellt dies kein Problem dar, da diese Güter bei einem Ermüden der kryptographischen Algorithmen einfach vollständig ersetzt werden. Anders sieht es jedoch im Fall von kostspieligen Investitionsgütern aus, insbesondere im Fall von solchen Investitionsgütern, die in großer Zahl ortsfest in weitverzweigte Infrastrukturen integriert sind, wie beispielsweise die Straßenbeleuchtung.

Die WO 2016/191176 A1 beschreibt ein Modul, beispielsweise ein M2M-Gerät oder ein Mobiltelefon, welches eine entfernbare Datenspeichereinheit umfasst. Die entfernbare Datenspeichereinheit umfasst einen nichtflüchtigen Speicher, einen Rauschverstärkungsspeicher und eine kryptographische Einheit. Der nichtflüchtige Speicher umfasst einen gemeinsam genutzten Speicher für den Zugriff sowohl durch das Modul als auch die kryptographische Einheit und einen geschützten Speicher, auf den nur durch die kryptographische Einheit zugegriffen werden kann. Die kryptographische Einheit verwendet eine Rauschspeicherschnittstelle und Rauschverstärkungsoperationen, um in dem Rauschverstärkungsspeicher aufgezeichnete Bitfehler zu erhöhen und zu verteilen. Die kryptographische Einheit kann erzeugt eine Zufallszahl unter Verwendung des Rauschverstärkungsspeichers und gibt die Zufallszahl in einen Satz kryptographischer Algorithmen ein, um intern ein PKI-Schlüsselpaar abzuleiten. Der private Schlüssel wird in dem geschützten Speicher gespeichert und der öffentliche Schlüssel wird von einer Zertifizierungsstelle signiert.

Der Wikipedia-Artikel "Power-line communication" (https://en.wikipedia.org/w/ index.php?title=Powerline_communication&oldid=708852481) vom 7. März 2016 beschreibt eine Übertragung von Daten auf einem Leiter, welcher zugleich für eine Übertragung von Wechselstrom oder eine Verteilung von Strom an Verbraucher verwendet wird.

Der Erfindung liegt demgegenüber die Aufgabe zugrunde, ein effizientes Verfahren zum Nachladen kryptographischer Programminstruktionen in ein Sicherheitsmodul zu schaffen, welches sich im Wirkbetrieb befindet, ohne die kryptographische Sicherheit des Sicherheitsmoduls in Frage zu stellen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Nachladen erster kryptographischer Programminstruktionen in ein im Wirkbetrieb befindliches Sicherheitsmodul zur kryptographischen Sicherung eines elektronischen Systems, welchem das Sicherheitsmodul zugeordnet ist. Die ersten kryptographischen Programminstruktionen umfassen einen ersten kryptographischen Algorithmus. Das Sicherheitsmodul umfasst einen vorprogrammierten nichtflüchtigen nichtänderbaren Festwertspeicher und einen nichtflüchtigen änderbaren Speicher sowie ferner initiale kryptographische Programminstruktionen mit einem initialen kryptographischen Algorithmus zur Verwendung eines dem initialen kryptographischen Algorithmus zugeordneten initialen kryptographischen Schlüssel mit einer ersten Schlüssellänge umfasst. Der initiale kryptographische Schlüssel ist in einem geschützten Speicherbereich eines der beiden Speicher gespeichert.

Der erste kryptographische Algorithmus ist zur Verwendung von kryptographischen Schlüsseln konfiguriert, die dem ersten kryptographischen Algorithmus zugeordnet sind und eine zweite Schlüssellänge aufweisen, wobei die erste Schlüssellänge größer als die zweite Schlüssellänge ist.

Das Verfahren umfasst:
- Authentifizierung einer externen Nachladeanwendung,
- nach erfolgreicher Authentifizierung Empfang der ersten kryptographischen Programminstruktionen,
- Prüfung der Gültigkeit der ersten kryptographischen Programminstruktionen mittels des initialen kryptographischen Algorithmus und des initialen kryptographischen Schlüssels durch Ausführen der initialen kryptographischen Programminstruktionen,
- unter der Voraussetzung, dass die Prüfung die Gültigkeit der ersten kryptographischen Programminstruktionen bestätigt, Installation der ersten kryptographischen Programminstruktionen in dem nichtflüchtigen änderbaren Speicher und Verwendung der ersten kryptographischen Programminstruktionen zur kryptographisch Datensicherung des elektronischen Systems.

Ausführungsformen der Erfindung sind besonders vorteilhaft, da ein Nachladen von kryptographischen Programminstruktionen im Wirkbetrieb des Sicherheitsmoduls ermöglicht wird, ohne hierdurch die Sicherheit des Sicherheitsmoduls in Frage zu stellen.

Der neue kryptographische Algorithmus wird in dem nichtflüchtigen, aber änderbaren Speicher des Sicherheitsmoduls gespeichert, sodass der Algorithmus ergänzt und/oder ersetzt werden kann. Damit der Austausch des Algorithmus auch in Zukunft sicher erfolgen kann, ist in dem Sicherheitsmodul ein sehr langer "ewiger Schlüssel" gespeichert sein, der zur Sicherung des Austausches und/oder der Ergänzung kryptographischer Algorithmen dienen kann. Ein ewiger Schlüssel bezeichnet hier einen Schlüssel, bei welchem basierend auf dem jetzigen Kenntnisstand davon ausgegangen werden kann, dass er auch noch die kommenden Jahrzehnte eine ausreichende Sicherheit bieten wird, beispielsweise die kommenden 20, 25 oder 30 Jahre.

Grundsätzlich könnte die Sicherheit der kryptographische Algorithmus durch die Verwendung sehr langer kryptographischer Schlüssel über einen längeren Zeitraum sichergestellt werden. Beim Betrieb des Sicherheitsmoduls laufen solch lange Schlüssel jedoch Gefahr unpraktisch zu sein und zu erheblichen Verzögerungen zu führen, insbesondere bei einem dauerhaften Einsatz.

Ausführungsformen können den Vorteil haben, dass eine Verwendung kürzerer Schlüssel für den ersten kryptographischen Algorithmus einen performanteren Betrieb des Sicherheitsmoduls erlaubt. Solange die zugrundeliegenden kryptographischen Algorithmen aktuell sind und noch nicht aufgrund neuer Entwicklungen im Bereich der Kryptographie an Sicherheit eingebüßt haben, bieten diese kürzeren Schlüssel zudem eine hinreichende Sicherheit. Sollte die Sicherheit nicht mehr hinreichend sein, so kann unter Verwendung des hierin beschriebenen Verfahrens zum Nachladen von kryptographischen Programminstruktionen ein sicherer kryptographischer Algorithmus geladen werden, welcher beispielsweise auf verbesserten kryptographischen Verfahren beruht und/oder kryptographische Schlüssel mit größeren Schlüssellängen verwendet. Die größeren Schlüssellängen sind dabei aber vorzugsweise nicht wesentlich längere als die bisherigen Schlüssellängen, z.B. doppelt so lang, um auch weiterhin einen performanten Betrieb des Sicherheitsmoduls gewährleisten zu können. Insbesondere sind die Schlüssellängen der nachgeladenen kryptographischen Algorithmen kürzer als die Schlüssellänge des initialen kryptographischen Schlüssels.

Ein "Sicherheitsmodul" stellt kryptographische Kernroutinen in Form von kryptographischen Programminstruktionen mit kryptographischen Algorithmen für Signaturerstellung und -prüfung, Schlüsselgenerierung, Schlüsselaushandlung, Ver-und Entschlüsselung von Daten sowie Zufallszahlengenerierung bereit und dient als sicherer Speicher für kryptographisches Schlüsselmaterial.

Bei dem Sicherheitsmodul kann es sich beispielsweise um einen geschützten Mikrocontroller handeln, d.h. einen Mikrocontroller mit physikalisch beschränkten Zugriffsmöglichkeiten. Zudem kann das Sicherheitsmodul zusätzliche Maßnahmen gegen Missbrauch aufweisen, insbesondere gegen unberechtigte Zugriffe auf Daten im Speicher des Sicherheitsmoduls. Beispielsweise umfasst ein Sicherheitsmodul Sensoren zur Überwachung des Zustands des Sicherheitsmoduls sowie von dessen Umgebung, um Abweichungen vom Normalbetrieb zu erkennen, welche auf Manipulationsversuche hinweisen können. Entsprechende Sensortypen umfassen beispielweise einen Taktfrequenzsensor, einen Temperatursensor, einen Spannungssensor, und/oder einen Lichtsensor. Taktfrequenzsensoren, Temperatursensoren und Spannungssensoren erfassen beispielweise Abweichungen der Taktfrequenz, Temperatur und/oder Spannung nach oben oder unten von einem vordefinierten Normalbereich. Insbesondere kann ein Sicherheitsmodul nichtflüchtige Speicher mit einem geschützten Speicherbereich umfassen.

Durch die Mittel zum Schutz gegen unbefugte Manipulationen wird durch technische Maßnahmen die Vertrauenswürdigkeit des Sicherheitsmoduls, das heißt seine Funktion als "Vertrauensanker", gewährleistet. Beispielsweise wird das Sicherheitsmodul von einer vertrauenswürdigen Institution, wie z.B. durch ein Trust-Center (Trust Service Provider), konfiguriert und mit dem benötigten kryptografischen Schlüsselmaterial versehen. Durch die Mittel zum Schutz gegen unbefugte Manipulationen kann sichergestellt werden, dass sicherheitsrelevante Funktionalitäten des Sicherheitsmoduls nicht modifiziert werden.

Beispielsweise sind zumindest Teile des Sicherheitsmoduls signiert, wie z.B. Programmkomponenten und/oder Hardwarekomponenten, die eine digitale Signatur tragen können. Insbesondere können das Betriebssystem, das Binary Input Output System (BIOS), eine Konfigurationsdatei und/oder ein Speicher des Sicherheitsmoduls digital signiert sein. Vor einer Nutzung des Sicherheitsmoduls wird geprüft, ob die Signatur bzw. die Signaturen, valide sind. Wenn eine der Signaturen nicht valide ist, wird die Nutzung des Sicherheitsmoduls und/oder des durch das Sicherheitsmodul gesicherten elektronischen Systems gesperrt.

Nach einer Ausführungsform der Erfindung beinhalten die Mittel zum Schutz des Sicherheitsmoduls gegen unbefugte Manipulationen mechanische Mittel, die z.B. das Öffnen des Sicherheitsmoduls oder seiner Teile verhindern sollen, oder die bei dem Versuch eines Eingriffs in das Sicherheitsmodul dieses unbrauchbar machen, beispielsweise indem ein Datenverlust eintritt. Beispielsweise können hierzu sicherheitskritische Teile des Sicherheitsmoduls in Epoxidharz eingegossen sein, wobei ein Versuch, eine betreffende Komponente aus dem Epoxidharz zu entfernen, zu einer unvermeidlichen Zerstörung dieser Komponente führt.

Des Weiteren kann ein Sicherheitsmodul Mittel zur kryptographischen Datensicherung umfassen, insbesondere in dem geschützten Speicherbereich, wie beispielsweise einen Zufallszahlengenerator, einen Generator für kryptographische Schlüssel, einen Hashgenerator, ein Ver-/Entschlüsselungsmodul, ein Signaturmodul, Zertifikate, und/oder einen oder mehrere nicht migrierbare kryptographische Schlüssel.

Ein Sicherheitsmodul kann nach Ausführungsformen beispielsweise in Form einer Chipkarte implementiert sein.

Unter einem "elektronischen System" werden im Folgenden insbesondere "intelligente Gegenstände" verstanden, d.h. informationstechnisch aufgerüstete Alltagsgegenstände, die einen Mehrwert durch sensorgestützte Informationsverarbeitung und Kommunikation erhalten.

Unter dem "Wirkbetrieb" eines Sicherheitsmoduls wird der Zustand eines Sicherheitsmoduls verstanden, das eine Produktionsumgebung nach einer Individualisierung, insbesondere dem Laden des Chipkartenbetriebssystems und anderer Daten, verlassen hat.

Unter einer "Individualisierung" wird hier ein initiales Laden von Individualisierungsdaten auf ein Sicherheitsmodul im Zuge der Herstellung verstanden, welche ausschließlich dem Sicherheitsmodul zugeordnet sind und/oder dieses eindeutig identifizieren. Individualisierungsdaten umfassen beispielsweise kryptografische Schlüssel und andere schutzbedürftige Daten, wie etwa Attribute bezüglich eines mit dem Sicherheitsmodul zu schützenden Geräts, des Herausgebers des Sicherheitsmoduls oder des Sicherheitsmoduls selbst, sowie einen eindeutigen Identifikator (abgekürzt auch UID von "unique identifier") des Sicherheitsmoduls. Zudem kann die Individualisierung ferner das initiale Laden eines Betriebssystems, insbesondere eines Chipkartenbetriebssystems, beispielsweise mithilfe eines Bootloaders umfassen.

Unter einem "Zertifikat" wird hier ein digitales Zertifikat verstanden, welches auch als Public-Key-Zertifikat bezeichnet wird. Durch solche Zertifikate basierend auf asymmetrischen Schlüsselpaaren wird eine so genannte Public Key Infrastructure (PKI) realisiert. Bei einem solchen Zertifikat handelt es sich um strukturierte Daten, die dazu dienen, einen öffentlichen Schlüssel eines asymmetrischen Kryptosystems einer Identität, wie zum Beispiel einer Person oder einer Vorrichtung, zuzuordnen. Ein Zertifikat kann beispielsweise einen öffentlichen Schlüssel beinhalten und signiert sein. Alternativ sind auch Zertifikate basierend auf zero-knowledge Kryptosystemen möglich. Beispielsweise kann das Zertifikat dem Standard X.509 oder einem anderen Standard entsprechen. Beispielsweise handelt es sich bei dem Zertifikat um ein CV-Zertifikat oder auch Card Verifiable Certificate (CVC). Eine Implementierung von solchen CVCs ist beispielsweise in der ISO/IEC 7816-8 spezifiziert.

Die PKI stellt ein System zum Ausstellen, Verteilen und Prüfen digitaler Zertifikate. Ein digitales Zertifikat dient in einem asymmetrischen Kryptosystem dazu die Authentizität eines öffentlichen Schlüssels und seinen zulässigen Anwendungs- und Geltungsbereich zu bestätigen. Das digitale Zertifikat ist selbst durch eine digitale Signatur geschützt, deren Echtheit mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate sind bei der Absicherung elektronischer Kommunikation durch asymmetrische kryptographische Verfahren ein bewährtes Mittel um Berechtigungen nachzuweisen. Zertifikate sind strukturierte Daten, die die Authentizität und/oder weitere Eigenschaften/Berechtigungen des Eigentümers eines öffentlichen Schlüssels (Signaturprüfschlüssel) dokumentieren und durch eine unabhängige, glaubwürdige Instanz (Zertifizierungsdienstanbieter/ZDA oder Vertrauensdiensteanbieter/VDA), im Allgemeinen die das Zertifikat zuteilende Zertifizierungsstelle, bestätigen. Zertifikate werden in der Regel einem breiten Personenkreis zur Verfügung gestellt um diesem eine Prüfung elektronischer Signaturen auf Authentizität und Gültigkeit zu ermöglichen.

Ein Zertifikat kann einer elektronischen Signatur zugeordnet sein, wenn der zu dem öffentlichen Schlüssel gehörende private Schlüssel zur Generierung der zu prüfenden elektronischen Signatur verwendet wurde. Dadurch, dass ein ZDA ein Zertifikat in Assoziation mit einem öffentlichen Schlüssel der Allgemeinheit zur Verfügung stellt, ermöglicht ein ZDA den Nutzern asymmetrischer Kryptosysteme den öffentlichen Schlüssel einer Identität, beispielsweise einer Person, einer Organisation, einem Energie- oder Computersystem, zuzuordnen.

Asymmetrische Schlüsselpaare werden für eine Vielzahl von Kryptosystemen eingesetzt und spielen auch bei der Signatur elektronischer Dokumente eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Dienstanbieter und/oder einen ZDA, weitergegeben werden darf sowie einem privaten Schlüssel, welcher zur Ver- und/oder Entschlüsselung von Daten verwendet wird und im Regelfall geheim gehalten werden muss. Der öffentliche Schlüssel ermöglicht es jedermann, Daten für den Inhaber des privaten

Schlüssels zu verschlüsseln, digitale Signaturen von dessen Dokumenten zu prüfen oder ihn zu authentifizieren. Ein privater Schlüssel ermöglicht es seinem Inhaber, mit dem öffentlichen Schlüssel verschlüsselte Daten zu entschlüsseln oder digitale Signaturen für elektronische Dokumente zu erstellen. Eine mit einem privaten Schlüssel erstellte Signatur kann mit dem zugehörigen öffentlichen Schlüssel verifiziert werden.

Bei symmetrischen Schlüsseln verwenden beide Teilnehmer des entsprechenden symmetrischen Kryptosystems denselben Schlüssel. Bei manchen symmetrischen Verfahren sind die beiden Schlüssel nicht identisch, aber können leicht auseinander berechnet werden. Symmetrische Schlüssel werden beispielsweise zum Berechnen von Nachrichtenauthentifizierungscodes (auch als MACs bezeichnet von "message authentication code") verwendet. MACs dient zur Prüfung der Integrität von Nachrichten, wobei MAC-Algorithmen im Allgemeinen zumindest zwei Eingabeparameter umfassen, d.h. erstens die zu schützenden Daten und zweitens einen geheimen Schlüssel, woraus sie eine Prüfsumme, den sogenannten Message Authentication Code, berechnen.

Digitale Signaturen werden zum sicheren elektronischen Datenaustausch, beispielsweise im Internet, eingesetzt und ermöglichen die Prüfung von Identitäten und/oder Berechtigungen und der Unverfälschtheit der ausgetauschten Daten. Um dies zu gewährleisten, ist in der Regel eine Public-Key-Infrastruktur notwendig, die die Gültigkeit der verwendeten Schlüssel durch Zertifikate bestätigt.

Die Erstellung einer digitalen Signatur, im Folgenden auch lediglich als "Signatur" bezeichnet, ist ein kryptographisches Verfahren, bei dem zu beliebigen Daten, zum Beispiel einem elektronischen Dokument, ein weiterer Datenwert, welcher als "Signatur" bezeichnet wird, berechnet wird. Die Signatur kann zum Beispiel ein verschlüsselter Hashwert des elektronischen Dokumentes sein, insbesondere ein Hashwert, welcher mit einem privaten Schlüssel eines kryptographischen Schlüsselpaares verschlüsselt ist, das einem Zertifikat zugeordnet ist. Die Besonderheit einer solchen Signatur besteht darin, dass deren Urheberschaft und Zugehörigkeit zu einer bestimmten Person oder Instanz durch jeden Dritten geprüft werden kann.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des Sicherheitsmoduls möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentisierung und/oder eine erfolgreiche Berechtigungsprüfung, handeln.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Bei einem Computer bzw. einem Computersystem kann es sich zum Beispiel um einen Personal Computer (PC) oder einen Laptop handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet oder ein Energieversorgungsnetz. Je nach Ausführungsform kann diese Verbindung auch über ein Mobilfunknetz hergestellt werden.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann, beispielsweise nach einem RFID- und/oder NFC-Standard. Bei der Kommunikationsschnittstelle kann es sich um eine interne Schnittstelle oder um eine externe Schnittstelle handeln, welche beispielsweise mittels eines Kabels oder kabellos mit einem zugeordneten Gerät verbunden ist. Insbesondere kann es sich um eine Schnittstelle zum Empfangen und Senden von Daten über ein Energieversorgungsnetz handeln.

Unter einem "Sensor" wird hier ein Element zum Erfassen von Messdaten verstanden. Messdaten sind Daten, welche physikalische oder chemische Eigenschaften eines Messobjekts, wie beispielsweise Wärmemenge, Temperatur, Feuchtigkeit, Druck, Schallfeldgrößen, Helligkeit, Beschleunigung, pH-Wert, lonenstärke, elektrochemisches Potential, und/oder dessen stoffliche Beschaffenheit qualitativ oder quantitativ wiedergeben. Messdaten werden mittels physikalischer oder chemischer Effekte erfasst und in ein elektronisch weiterverarbeitbares elektrisches Signal umgeformt.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einer "verschlüsselten Ende-zu-Ende-Verbindung" bzw. einem "verschlüsselten Ende-zu-Ende-Übertragungskanal" wird hier eine Verbindung zwischen einem

Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht dient.

Der Schlüssel zum Authentifizieren des Senders der Nachricht kann beispielsweise zum Erstellen eines Nachrichtenauthentifizierungscodes (Message Authentication Code, MAC) dienen. Mittels eines MAC lässt sich Gewissheit über den Ursprung der Nachrichten erhalten und deren Integrität verifizieren. MAC-Algorithmen erfordern zwei Eingabeparameter, erstens die zu schützenden Daten und zweitens einen geheimen Schlüssel. Aus diesen beiden wird ein Nachrichtenauthentifizierungscode in Form einer Prüfsumme berechnet. Der Sender einer Nachricht berechnet für die zu übermittelnden Daten der Nachricht einen MAC und sendet die Nachricht zusammen mit dem MAC an den Empfänger. Der Empfänger berechnet den MAC zu der empfangenen Nachricht mit seinem Schlüssel und vergleicht den berechneten MAC mit dem empfangenen MAC. Aus einer Übereinstimmung beider Werte folgt, dass die Nachricht von einer Partei abgeschickt wurde, welche Zugriff auf den geheimen Schlüssel besitzt und die Nachricht wurde während der Übertragung nicht verändert.

Gemäß einem Request-Response-Protokoll schickt ein erster Teilnehmer einer zweiseitigen Kommunikation einen sogenannten Request (Anforderung) an den zweiten Teilnehmer. Ein Request enthält einen oder mehrere Befehle, welche angeben, welche Funktionen der zweiten Teilnehmer ausführen soll. Nachdem der zweite Teilnehmer den oder die Befehle gemäß Request verarbeitet hat, antwortet er mit einer Response (Antwort).

Nach Ausführungsformen wird das das Laden der ersten kryptographischen Programminstruktionen mittels eines Bootloaders ausgeführt. Ein sogenannter Bootloader, welcher auch als "Urlader" bezeichnet wird, wird im Allgemeinen verwendet, um ein Chipkartenbetriebssystem in einen nichtflüchtigen änderbaren Speicher (basierend auf z.B. EEPROM- oder Flash-EEPROM-Technologie) einer Chipkarte zu laden. Mithilfe des Bootloaders kann das Chipkartenbetriebssystem an eine entsprechende Speicheradresse im nichtflüchtigen änderbaren Speicher (abgekürzt auch NVM von "non-volatile memory") geladen werden.

Der Bootloader befindet sich in einem nichtflüchtigen nichtänderbaren Festwertspeicher (üblicherweise als ROM bezeichnet von "read only memory"), welcher üblicherweise auch ein Programm des Hardwaretests für den Chip der Chipkarte enthält, wobei der Bootloader in das ROM mithilfe einer ROM-Maske eingebracht wird.

Ein Bootloader findet im Stand der Technik üblicherweise nur für das initiale Laden des Chipkartenbetriebssystems während der Produktion bzw. Individualisierung der Chipkarte in einer sicheren Produktionsumgebung Verwendung und ist anschließend für die gesamte Lebensdauer der Chipkarte deaktiviert. Ein Nachladen von kryptographischen Programminstruktionen mittels des Bootloader im ROM ist aus Sicherheitsgründen nicht vorgesehen, da es bekannten Bootloader an hinreichend sicheren Mechanismen für das Einbringen von Programminstruktionen im Wirkbetrieb der Chipkarte fehlt.

Bei Ausführungsformen kann eine hinreichende Sicherheit beispielsweise dadurch sichergestellt werden, dass für die Authentifizierung der externen Nachladeanwendung kryptographische Algorithmen verwendet werden, welche hohen, aktuellen Sicherheitsstandards entsprechen. Die Bereitstellung entsprechender Algorithmen kann durch das wiederholte Nachladen aktualisierter kryptographischen Programminstruktionen, wie es hierin beschrieben wird, sichergestellt werden. Nachdem diese Authentifizierung erfolgreich durchgeführt worden ist, werden entsprechende Daten in einen vordefinierten Speicherbereich geschrieben. Erst anschließend wird der Bootloader gestartet. Der Bootloader greift dann auf den vordefinierten Speicherbereich zu, um zu prüfen, ob die vorhergehende Authentifizierung der externen Nachladeanwendung durch das Sicherheitsmodul erfolgreich durchgeführt worden ist. Wenn dies der Fall ist, erfolgt anschließend das Laden der kryptographischen Programminstruktionen von der externen Nachladeanwendung.

Ferner wird eine Prüfung der Gültigkeit der ersten kryptographischen Programminstruktionen mittels des initialen kryptographischen Algorithmus und des initialen kryptographischen Schlüssels ausgeführt. Wobei die Länge des initialen kryptographischen Schlüssels hinreichend lange gewählt werden kann, sodass er selbst über längere Zeiträume hinweg sicher bleibt. Selbst wenn also die aktuellsten auf dem Sicherheitsmodul verfügbaren kryptographische Algorithmen keine ausreichende Sicherheit mehr zu bieten, so vermag der initiale kryptographische Schlüssel nach wie vor eine sichere Kommunikation zu ermöglichen.

Nach weiteren Ausführungsformen erfolgt auch die Authentifizierung unter Verwendung des initialen kryptographischen Schlüssels. Ausführungsformen können den Vorteil haben, dass selbst wenn die aktuellsten auf dem Sicherheitsmodul verfügbaren kryptographischen Algorithmen geschwächt sind, durch den initialen kryptographischen Schlüssel eine sichere Authentifizierung gewährleistet werden kann. Aus einer erfolgreichen Authentifizierung kann sich nach Ausführungsformen beispielsweise implizit auch Gültigkeit der ersten kryptographischen Programminstruktionen ergeben.

Nach Ausführungsformen sind die initialen kryptographischen Programminstruktionen so konfiguriert, dass der initiale kryptographische Schlüssel ausschließlich zum Nachladen kryptographischer Programminstruktionen verwendet wird. Ausführungsformen können den Vorteil haben, dass selbst bei einer sehr großen Länge des initialen kryptographischen Schlüssels ein performanter Betrieb des Sicherheitsmoduls sichergestellt werden kann.

Im Hinblick darauf, was als eine sichere Schlüssellänge angesehen werden kann muss nach Art der zugrundeliegenden kryptographischen Algorithmen unterschieden werden. Für symmetrischen Verschlüsselungsverfahren mit einem geheimen Schlüssel gilt für heutzutage zur Verfügung stehende Rechnerleistungen, dass Schlüssel mit einer effektiven Länge von weniger als 100 Bit als unsicher anzusehen sind, d.h. mit moderatem Rechnereinsatz durch Ausprobieren aller potentiell möglichen Schlüssel gebrochen werden können. Für asymmetrischen Verschlüsselungs- und Signaturverfahren Algorithmen, deren Sicherheit auf dem Problem des Faktorisierens großer Zahlen basiert, gilt heute, dass Schlüssellängen von weniger als 2000 Bit als unsicher zu betrachten sind. Ein Grund hierfür liegt in immer weiteren Fortschritten bei der Entwicklung effizienter Faktorisierungsalgorithmen, die heute unter massivem Rechnereinsatz effiziente Faktorisierungen von Zahlen mit rund 800-900 Bit Länge erlauben. Für Hashfunktionen, welche eine beliebig lange Zeichenkette auf einen Hashwert mit konstanter Bitlänge abbilden, Algorithmen als unsicher betrachtet, wenn die konstante Länge des Hashwertes geringer ist als 200 Bit ist, da andernfalls zwei Zeichenketten ermittelt werden können, die den gleichen Hashwert ergeben.

Nach Ausführungsformen weist der initiale kryptographische Schlüssel eine mindestens dreifache, vierfache, fünffache, sechsfache, siebenfache, achtfache, neunfache, zehnfache, elffache, zwölffache, dreizehnfache, vierzehnfache, fünfzehnfache, sechzehnfache, siebzehnfache, achtzehnfache, neunzehnfache, zwanzigfache, zweiunddreissigfache oder mindestens eine vierundsechzigfache Schlüssellänge im Vergleich zu den Schlüssellängen der dem ersten kryptographischen Algorithmus zugeordneten kryptographischen Schlüssel auf. Nach Ausführungsformen weist der initiale kryptographische Schlüssel insbesondere mindestens eine dreifache, vierfache, fünffache, sechsfache, siebenfache, achtfache, neunfache, zehnfache, elffache, zwölffache, dreizehnfache, vierzehnfache, fünfzehnfache, sechzehnfache, siebzehnfache, achtzehnfache, neunzehnfache, zwanzigfache, zweiunddreissigfache oder mindestens eine vierundsechzigfache Schlüssellänge im Vergleich zu den heute als sicher angesehenen Schlüssellängen auf. Nach Ausführungsformenbeträgt die Schlüssellänge des initialen kryptographischen Schlüssels beispielweise 384 Bit, 512 Bit, 640 Bit, 768 Bit, 896 Bit, 1024 Bit, 1152 Bit, 1280 Bit, 1408 Bit, 1536 Bit, 1664 Bit, 1792 Bit, 1920 Bit, 2048 Bit, 2176 Bit, 2304 Bit, 2432 Bit, 2560 Bit, 4096 Bit, 8192 Bit oder mehr. Ausführungsformen können den Vorteil haben, dass entsprechende initialen kryptographischen Schlüssel des initialen kryptographischen Algorithmus auch noch hinreichend sicher sind, wenn die Sicherheit der kürzeren Schlüssel des ersten kryptographischen Algorithmus in Zweifel zu ziehen ist.

Nach Ausführungsformen handelt es sich bei dem initialen kryptographischen Schlüssel um einen Schlüssel eines symmetrischen Schlüsselpaars. Nach Ausführungsformen handelt es sich bei dem initialen kryptographischen Schlüssel um einen öffentlichen Schlüssel eines asymmetrischen Schlüsselpaars.

Nach Ausführungsformen erfolgt der Empfang der ersten kryptographischen Programminstruktionen über einen mittels Ende-zu-Ende-Verschlüsselung gesicherten Kommunikationskanal zwischen dem Sicherheitsmodul und der externen Nachladeanwendung. Nach Ausführungsformen erfolgt die Ende-zu-Ende-Verschlüsselung unter Verwendung des initialen kryptographischen Schlüssels. Ausführungsformen können den Vorteil haben, dass sie eine sichere Bereitstellung der ersten kryptographischen Programminstruktionen ermöglichen.

Nach Ausführungsformen dient der erste kryptographische Algorithmus zur Signaturerstellung und Signaturprüfung, Schlüsselgenerierung, Schlüsselaushandlung, Verschlüsselung und Entschlüsselung von Daten und/oder Zufallszahlengenerierung dient. Beispielsweise umfasst erste kryptographische Algorithmus einen symmetrischen Verschlüsselungsalgorithmus, wie etwa Triple-DES, IDEA, AES, oder Milenage, einen asymmetrischen Verschlüsselungsalgorithmus, wie etwa RSA, DAS, oder einen Algorithmus basierend auf Elliptische-Kurven (abgekürzt auch ECC von "elliptic curve cryptography"), einen Hash-Algorithmus, wie etwa SHA-224, SHA-256, SHA-384 oder SHA-512, und/oder einen Zufallszahlengenerator (abgekürzt auch RNG von "random number generator").

Nach Ausführungsformen ersetzt die ersten kryptographischen Programminstruktionen zumindest teilweise zweite in dem nichtflüchtigen änderbaren Speicher gespeicherte kryptographische Programminstruktionen. Die zweiten kryptographischen Programminstruktionen umfassen einen zweiten zur kryptographisch Datensicherung des elektronischen Systems verwendeten kryptographischen Algorithmus. Das Verfahren umfasst ferner: Löschen der zu ersetzenden Teile der zweiten kryptographischen Programminstruktionen. Ausführungsformen können den Vorteil haben, dass sie eine effiziente Aktualisierung nicht mehr hinreichend sicherer kryptographischer Algorithmen durch sicherere kryptographische Algorithmen erlauben.

Nach Ausführungsbespielen erfolgt die Authentifizierung der externen Nachladeanwendung unter Verwendung des zweiten kryptographischen Algorithmus. Nach Ausführungsbespielen erfolgt die Authentifizierung der externen Nachladeanwendung unter Verwendung des initialen kryptographischen Algorithmus und des initialen kryptographischen Schlüssels.

Nach Ausführungsformen umfasst das Ersetzen ferner:
- Setzen eines Flags in dem nichtflüchtigen änderbaren Speicher, welches anzeigt, dass ein zumindest teilweises Ersetzen der zweiten kryptographischen Programminstruktionen erfolgen soll,
- Zurücksetzen des Flags nach Abschluss der Installation der ersten kryptographischen Programminstruktionen.

Nach Ausführungsformen umfasst das Ersetzen ferner:
- Protokollieren der einzelnen Schritte des Ersetzens durch Protokolldateien,
- Revidieren der protokollierten Schritte, falls es zu einem Abbruch des Ersetzens ohne Zurücksetzen des Flags kommt.

Ausführungsformen können den Vorteil haben, dass bei einem Abbruch des Nachladevorgangs, beispielsweise durch eine Unterbrechung der Kommunikationsverbindung zwischen Sicherheitsmodul und externer Nachladeanwendung, keine nur teilweise oder inkorrekte Ersetzung von kryptographischen Programminstruktionen erfolgt ist. Wird von dem Sicherheitsmodul nämlich festgestellt, dass das Flag in dem geschützten elektronischen Speicher gesetzt ist, so bedeutet dies, dass der neue kryptographische Algorithmus nicht verwendet werden kann. Nach Ausführungsformen der Erfindung kann für einen solchen Fall vorgesehen sein, dass der Zustand des Sicherheitsmoduls vor dem Start des Änderungsverfahrens wiederhergestellt wird, wonach dann das Flag zurückgesetzt wird und das Sicherheitsmodul wieder betriebsbereit ist. Dies kann dadurch erreicht werden, dass jeder Schritt in dem Änderungsverfahren durch Protokolldateien von dem Sicherheitsmodul protokolliert wird, so dass vorgenommene Änderungen anhand dieser Protokolldateien wieder rückgängig gemacht werden können.

Nach Ausführungsformen umfasst das Nachladen ferner: Durchführung einer Funktionsprüfung der installierten ersten kryptographischen Programminstruktionen, wobei das Löschen der zweiten kryptographischen Programminstruktionen nur unter der Voraussetzung erfolgt, dass die Funktionsprüfung ein Funktionieren der ersten kryptographischen Programminstruktionen ermittelt, wobei im Falle eines ermittelten Nicht-Funktionierens die ersten kryptographischen Programminstruktionen von dem nichtflüchtigen änderbaren Speicher gelöscht werden und das Löschen der zweiten kryptographischen Programminstruktionen unterbleibt. Ausführungsformen können den Vorteil haben, dass nicht nur die Vollständigkeit der Installation der ersten kryptographischen Programminstruktionen sichergestellt wird, sondern auch deren Korrektheit und Funktionsfähigkeit.

Nach Ausführungsformen sind die initialen kryptographischen Programminstruktionen und der initiale kryptographische Schlüssel in dem Festwertspeicher gespeichert. Nach Ausführungsformen handelt es sich bei dem Festwertspeicher um einen ROM-Speicher, in welchem die initialen kryptographischen Programminstruktionen und der initiale kryptographische Schlüssel mittels ROM-Maske festverdrahtet sind. Ausführungsformen können den Vorteil haben, dass der initiale kryptographische Schlüssel einen langlebigen, nichtänderbaren Anker für ein kryptographisch gesichertes Nachladen aktualisierter kryptographischen Programminstruktionen bereitstellt.

Nach Ausführungsformen handelt es sich bei dem nichtflüchtigen änderbaren Speicher um einen EEPROM-Speicher oder Flash-EEPROM-Speicher.

Nach Ausführungsformen erfolgt das Nachladen der ersten kryptographischen Programminstruktionen mittels Fernwartung über ein Netzwerk. Nach Ausführungsformen ist das Netzwerk ein elektrisches Energieversorgungsnetz. Nach weiteren Ausführungsformen kann das Netzwerk jede andere bekannte Kommunikationsnetzform mit intelligenten Sensoren bzw. zur Anbindung von intelligenten Sensoren sein, wie etwa das Internet, ein Mobilfunknetz oder ein lokales Intranet. Ausführungsformen können den Vorteil haben, dass Sicherheitsmodule einer großen Anzahl selbst weit verteilter elektronischer Systeme, wie etwa der Straßenbeleuchtung, in effizienter weise nachträglich mit neuen kryptographischen Programminstruktionen versehen werden können.

Nach Ausführungsformen umfasst das Sicherheitsmodul ein Chipkartenbetriebssystem. Ausführungsformen können den Vorteil haben, dass ein kompaktes Betriebssystem bereitgestellt wird. Dadurch können beispielsweise Kosten für die Hardware eingespart werden, was es erlaubt eine sehr große Anzahl von elektronischen Systemen, insbesondere intelligente Gegenstände des IoT, mit Sicherheitsmodulen zu versehen.

Nach Ausführungsformen erfolgt die Prüfung der Gültigkeit der ersten kryptographischen Programminstruktionen anhand einer Signatur. Nach Ausführungsformen umfasst die Prüfung der Gültigkeit der ersten kryptographischen Programminstruktionen:
- Empfang eines den ersten kryptographischen Programminstruktionen zugeordneten ersten MAC-Werts,
- Berechnung eines zweiten MAC-Werts der ersten kryptographischen Programminstruktionen unter Verwendung des initialen kryptographischen Schlüssels,
- Vergleich des ersten und zweiten MAC-Werts, wobei die Bestätigung der Gültigkeit der ersten kryptographischen Programminstruktionen eine Übereinstimmung beider MAC-Werte voraussetzt.

Ausführungsformen können den Vorteil haben, dass Ursprung und Integrität der ersten kryptographischen Programminstruktionen sichergestellt werden kann. Beispielsweise kann eine Übertragung der ersten kryptographischen Programminstruktionen unter Verwendung von Secure Messaging nach ISO/IEC 7816-4 erfolgen.

Nach Ausführungsformen werden die ersten kryptographischen Programminstruktionen in verschlüsselter Form empfangen, wobei das Verfahren ferner umfasst: Entschlüsseln der verschlüsselten ersten kryptographischen Programminstruktionen unter Verwendung des initialen kryptographischen Schlüssels. Ausführungsformen können den Vorteil haben, dass eine sichere Übertragung der kryptographischen Programminstruktionen gewährleistet wird. Insbesondere kann eine Verschlüsslung der ersten kryptographischen Programminstruktionen zusätzlich zu der Verwendung einer Ende-zu-Ende-Verschlüsselung des Übertragungskanals zwischen Sicherheitsmodul und Nachladeanwendung erfolgen.

Ausführungsformen umfassen ferner ein Computerprogrammprodukt, insbesondere ein computerlesbares, nichtflüchtiges Speichermedium, mit ausführbaren Programminstruktionen zur Ausführung eines Verfahrens gemäß einer der zuvor beschriebenen Ausführungsformen.

Ausführungsformen umfassen ferner ein Sicherheitsmodul, welches dazu konfiguriert ist, ein Verfahren gemäß einer der zuvor beschriebenen Ausführungsformen auszuführen.

Ausführungsformen umfassen ferner ein elektronisches System mit dem zuvor genannten Sicherheitsmodul.

Ausführungsformen umfassen ferner ein Verfahren zum Nachladen erster kryptographischer Programminstruktionen in ein im Wirkbetrieb befindliches Sicherheitsmodul zur kryptographischen Sicherung eines elektronischen Systems, welchem das Sicherheitsmodul zugeordnet ist, durch ein Computersystem zur Wartung des Sicherheitsmoduls, wobei die ersten kryptographischen Programminstruktionen einen ersten kryptographischen Algorithmus umfassen. Das Sicherheitsmodul umfasst einen vorprogrammierten nichtflüchtigen nichtänderbaren Festwertspeicher und einen nichtflüchtigen änderbaren Speicher sowie ferner initiale kryptographische Programminstruktionen mit einem initialen kryptographischen Algorithmus zur Verwendung eines dem initialen kryptographischen Algorithmus zugeordneten initialen kryptographischen Schlüssel mit einer ersten Schlüssellänge umfasst. Der initiale kryptographische Schlüssel ist in einem geschützten Speicherbereich eines der beiden Speicher gespeichert.

Der erste kryptographische Algorithmus ist zur Verwendung von kryptographischen Schlüsseln konfiguriert, die dem ersten kryptographischen Algorithmus zugeordneten sind und eine zweite Schlüssellänge aufweisen, wobei die erste Schlüssellänge größer als die zweite Schlüssellänge ist.

Das Verfahren umfasst:
- Herstellen einer Netzwerkverbindung zwischen dem Sicherheitsmodul und der Nachladeanwendung des Computersystems,
- gegenseitige Authentifizierung zwischen dem Sicherheitsmodul des elektronischen Systems und einer Nachladeanwendung des Computersystems zur Wartung,
- nach erfolgreicher Authentifizierung Senden der ersten kryptographischen Programminstruktionen durch die Nachladeanwendung und Empfang der ersten kryptographischen Programminstruktionen durch das Sicherheitsmodul,
- Prüfung der Gültigkeit der ersten kryptographischen Programminstruktionen durch das Sicherheitsmodul mittels des initialen kryptographischen Algorithmus und des initialen kryptographischen Schlüssels durch Ausführen der initialen kryptographischen Programminstruktionen,
- unter der Voraussetzung, dass die Prüfung die Gültigkeit der ersten kryptographischen Programminstruktionen bestätigt, Installation der ersten kryptographischen Programminstruktionen in dem nichtflüchtigen änderbaren Speicher des Sicherheitsmoduls und Verwendung der ersten kryptographischen Programminstruktionen zur kryptographisch Datensicherung des elektronischen Systems.

Ausführungsformen umfassen ferner ein verteiltes System, welches dazu konfiguriert ist, dieses Verfahren auszuführen, und ein elektronisches System mit einem Sicherheitsmodul zur kryptographischen Sicherung des elektronischen Systems sowie ein Computersystem zur Wartung des Sicherheitsmoduls umfasst.

Im Weiteren werden Ausführungsformen der Erfindung mit Bezugnahme auf die Zeichnungen erläutert. Es zeigen:
- Figur 1: ein Blockdiagramm einer beispielhaften Ausführungsform eines Sicherheitsmoduls,
- Figur 2: ein Flussdiagramm einer ersten beispielhaften Ausführungsform eines Verfahrens zum Nachladen kryptographischer Programminstruktionen, und
- Figur 3: ein Flussdiagramm einer zweiten beispielhaften Ausführungsform eines Verfahrens zum Nachladen kryptographischer Programminstruktionen.

Im Weiteren werden gleiche oder entsprechende Elemente der nachfolgenden Ausführungsformen jeweils mit identischen Bezugszeichen gekennzeichnet.

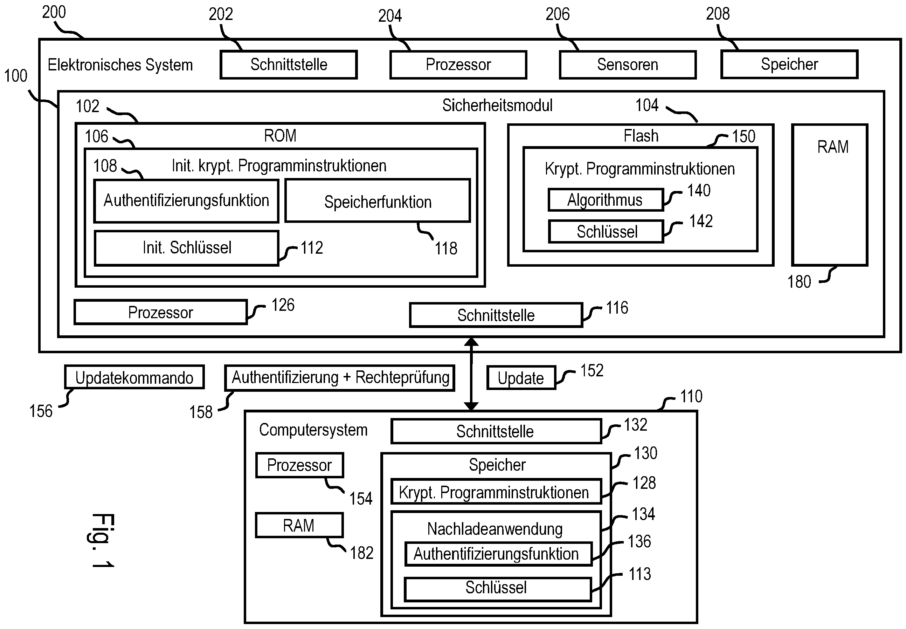

Figur 1 zeigt ein Sicherheitsmodul 100 zur kryptographischen Sicherung eines elektronischen Systems 200. Das elektronischen System 200 weist beispielsweise einen

Prozessor 204, einen Speicher 208, Sensoren 206 zur Erfassung von Messwerten, z.B. Umgebungsparameter, und eine Schnittstelle 202 zur internen Kommunikation mit dem Sicherheitsmodul 100 auf.

Das Sicherheitsmodul 100 umfasst einen Festwertspeicher in Form eines ROM 102 und einen nichtflüchtigen veränderbaren Speicher, beispielsweise einem EEPROM, insbesondere einem sogenannten Flash-EEPROM 104, welches einen durch eine Schreiboperation änderbaren Inhalt aufweist.

Das ROM 102 beinhaltet initiale kryptographische Programminstruktionen 106, die bei der Produktion des Chips, der das ROM 102 beinhaltet, mithilfe einer sogenannten ROM-Maske eingebracht worden sind. Die initialen kryptographischen Programminstruktionen 106 beinhalten beispielsweise eine Authentifizierungsfunktion 108 zur Authentifizierung einer Nachladeanwendung 134 eines Computersystems 110 zur Wartung des Sicherheitsmoduls 100. Das Computersystems 110 umfasst einen Speicher 130, in dem kryptographische Programminstruktionen 150 gespeichert sind zum Aktualisieren und/oder Ersetzen der kryptographische Programminstruktionen 128 im Flash 104 des Sicherheitsmoduls 100. Ferner beinhaltet der Speicher 130 die Nachladeanwendung 134 mit einer Authentifizierungsfunktion 136, welche mit der Authentifizierungsfunktion 140 des Sicherheitsmoduls 100 interoperabel sind. Das Computersystem 110 umfasst ferner einen Prozessor 154 zur Ausführung der Nachladeanwendung 134 sowie eine Schnittstelle 132 zur Kommunikation mit dem Sicherheitsmodul 100 über dessen Schnittstelle 116.

Beispielsweise beinhalten die initialen kryptographischen Programminstruktionen 106 einen initialen kryptographischen Schlüssel 112, bei welchem es sich beispielsweise um einen symmetrischen Schlüssel handelt. Im Falle eines symmetrischen Schlüssels 112 besitzt auch die Nachladeanwendung 134 Zugriff auf eine Kopie 113 dieses Schlüssels, um sich gegenüber dem Sicherheitsmodul 100 zu authentifizieren. Nach Ausführungsformen können die initialen kryptographischen Programminstruktionen 106 auch ganz/oder teilweise in dem Flash 104 gespeichert sein. Nach weiteren Ausführungsformen handelt es sich bei dem initialen kryptographischen Schlüssel 112 um einen öffentlichen Schlüssel eines asymmetrischen Schlüsselpaars, auf dessen komplementären privaten Schlüssel 113 die Nachladeanwendung 134 Zugriff besitzt.

Das Sicherheitsmodul 100 hat ferner eine Schnittstelle 116 für die Kommunikation und Datenübertragung zwischen dem Sicherheitsmodul 100 und elektronischen System 200 einerseits, sowie zwischen dem Sicherheitsmodul 100 und dem Computersystem 110 mit der Nachladeanwendung 134 andererseits. Bei der Schnittstelle 116 kann es sich beispielsweise um eine drahtlose Schnittstelle, etwa nach einem NFC- oder RFID-Standard handeln, insbesondere eine kontaktlose Schnittstelle gemäß ISO 14443, vorzugsweise mit Unterstützung von Very High Bit Rate (VHBR). Alternativerweise kann es sich auch um eine kontaktbehaftete Schnittstelle handeln. Insbesondere kann es sich um eine Schnittstelle zur Datenübertragung über ein elektrisches Energieversorgungsnetz, beispielsweise in Form eines PowerLAN, handeln. Dies kann den Vorteil haben, dass neben der Infrastruktur zur Energieversorgung des elektronischen Systems, welches das Sicherheitsmodul schützt, keine zusätzliche Infrastruktur zur Datenübertragung notwendig ist.

Die initiale kryptographische Programminstruktionen 106 umfassen ferner eine Speicherfunktion 118, die zum Zugriff auf den änderbaren Speicher 104 dient, mit beispielsweise den erforderlichen Funktionalitäten für das Adressieren, Löschen, Schreiben und/oder Lesen des änderbaren nichtflüchtigen Speichers 104, gegebenenfalls mit Unterstützung einer Memory Management Unit (MMU) (vergleiche Handbuch der Chipkarten, Seite 106 unter 5.4.11).

Nach Ausführungsformen sind die initialen kryptographische Programminstruktionen 106 ferner zur Verarbeitung von Kommandos in der Form von Kommando-APDUs ausgebildet, insbesondere gemäß ISO/IEC 7816-4. Nach Ausführungsformen sind die initialen kryptographischen Programminstruktionen 106 und die Nachladeanwendung 134 ferner zur Ausführung eines Request-Response-Protokolls ausgebildet.

Das Sicherheitsmodul 100 umfasst einen Prozessor 126, wobei der Prozessor 126 Logikschaltungen beinhaltet, die in ein oder mehreren diskreten Komponenten oder auf demselben Chip integrierten Modulen realisiert sein können, und welche unter anderem zur Ausführung der initialen kryptographische Programminstruktionen 106 dienen.

Das Computersystem 110 verfügt über eine der Schnittstelle 116 entsprechende Schnittstelle 132, um mit dem Sicherheitsmodul 100 zu kommunizieren. Beispielsweise sendet das Computersystem 110 zunächst ein Updatekommando 156 an das Sicherheitsmodul 100, um die kryptographischen Programminstruktionen 150 mit dem kryptographischen Algorithmus 140 teilweise oder vollständig durch die kryptographischen Programminstruktionen 128 zu ersetzen. Der kryptographischen Algorithmus 140 ist zur Verwendung von kryptographischen Schlüsseln 142 konfiguriert. Hierbei weist der für das Updaten verwendete initiale kryptographische Schlüssel 112 eine Schlüssellänge auf, welche deutlich größer als die Schlüssellänge der Schlüssel 142 ist. Zunächst wird in Antwort auf den Erhalt des Updatekommandos 156 die Authentifizierungsfunktion 108 gestartet, woraufhin entsprechend Daten 158 zur Authentifizierung zwischen den Authentifizierungsfunktionen 108 und 136 ausgetauscht werden.

Beispielsweise sendet das Computersystem 110 eine mit dem Schlüssel 113 verschlüsselte Nachricht an das Sicherheitsmodul 100. Durch Ausführung der Authentifizierungsfunktion 108 durch den Prozessor 126 wird dann geprüft, ob die von dem Computer 110 empfangene mit dem Schlüssel 113 verschlüsselte Nachricht mit dem Schlüssel 112 der Authentifizierungsfunktion 108, der in der ROM-Maske beinhaltet ist, entschlüsselt werden kann. Wenn dies der Fall ist, gilt der Computer 110 als authentifiziert. Im nächsten Schritt liest der Computer 110 die kryptographischen Programminstruktionen 150 aus seinem Speicher 130 und sendet diese in Form eines oder mehrerer Datenpakete 152 an das Sicherheitsmodul 100. Das Sicherheitsmodul 100 schreibt daraufhin die kryptographischen Programminstruktionen 150 durch die Speicherfunktion 118 in den nichtflüchtigen änderbaren Speicher 104. Alternativ kann auch so vorgegangen werden, dass die kryptographischen Programminstruktionen 150 mit dem Schlüssel 113 verschlüsselt sind und dann durch die Authentifizierungsfunktion 108 entschlüsselt wird. Da eine Entschlüsselung nur dann möglich ist, wenn die Verschlüsselung mit dem zutreffenden kryptographischen Schlüssel erfolgte, kann in diesem Fall auf einen separaten Authentifizierungsschritt verzichtet werden, da dieser der Entschlüsselung kryptographischen Programminstruktionen 150 durch das Sicherheitsmodul 100 inhärent ist. Mit anderen Worten handelt es sich bei den Daten 152 und 158 um dieselben Daten.

Das Sicherheitsmodul umfasst beispielsweise auch ein Chipkartenbetriebssystem (nicht gezeigt) im ROM 102 und/oder Flash 104., welches einen Programmaufruf 142 zum Starten des Nachladevorgangs umfasst.

Die Authentifizierungsfunktion 136 ist so gewählt, dass sie eine hinreichend starke Authentifizierung eines Computersystems 110, gewährleistet. Beispielsweise werden durch die Authentifizierungsfunktion 136 die das Sicherheitsmodul 100 betreffenden Schritte eines kryptografischen Protokolls, das auf asymmetrischen kryptografischen Schlüsselpaaren basiert, implementiert, wie zum Beispiel ein Challenge-Response-Protokoll, ein Diffie-Hellman-Protokoll, ein Extended Access Control-Protokoll (EAC) oder ein PACE-Protokoll mit sogenannter Terminal Authentication (TA) und Chip Authentication (CA) (vergleiche Technical Guideline TR-03110-2, Advanced Security Mechanisms for Machine Readable Travel Documents - Part 2, Version 2.11, 20. März 2012, Bundesamt für Sicherheit in der Informationstechnik).

Neben der Authentifizierung kann die Authentifizierungsfunktionen 136 und 140 auch eine Berechtigungsprüfung beinhalten sowie die Festlegung von einem oder mehreren Parametern zum Aufbau einer gesicherten Kommunikation, wie zum Beispiel eines Sitzungsschlüssels zum Aufbau eines Secure-Messaging(SM)-Kanals. Der entsprechende Sitzungsschlüssel kann beispielsweise aus den initialen kryptographischen schlüsseln 112 und/oder 113 abgeleitet sein.

Zur Durchführung des Updates des kryptographischen Algorithmus kann wie folgt vorgegangen werden:
Das Computersystem 110 sendet ein Kommando 156 an die Chipkarte 100, um den Nachlade- bzw. Update-Vorgang zu starten. Hierdurch werden die Authentifizierungsfunktionen 108 und 136 gestartet, sodass ein kryptografisches Protokoll zur Prüfung der Authentizität zwischen Sicherheitsmodul 108 und Computersystem 110 durchgeführt, wozu das entsprechend Daten 158 ausgetauscht werden.

Vorzugsweise wird neben der Authentizität des Computersystems 110 auch dessen Recht für die Vornahme des Updates geprüft. Hierzu sendet das Computersystem 110 beispielsweise ein digitales Zertifikat, indem sein Recht für das Nachladen von kryptographischen Programminstruktionen spezifiziert ist. Anhand dieses Zertifikats kann durch das Sicherheitsmoduls 100 geprüft werden, ob das Computersystem 110 für das Nachladen der kryptographischen Programminstruktionen die erforderliche Berechtigung besitzt.

Durch Ausführung der Authentifizierungsfunktionen 108 und 140 werden ferner ein oder mehrere Parameter festgelegt, die für eine sichere Kommunikation erforderlich sind, wie zum Beispiel durch einen Diffie-Hellman Schlüsselaustausch oder ein anders Verfahren, mit dem beispielsweise ein symmetrischer Sitzungsschlüssel festgelegt wird. Unter der Voraussetzung, dass die Authentifizierung und gegebenenfalls die Rechteprüfung des Computersystems 110 erfolgreich durchgeführt worden sind, speichert dann die Authentifizierungsfunktionen 108 bzw. 135 jeweils solche Parameter in Arbeitsspeichern (RAM) 180 und 182 von Sicherheitsmodul 100 bzw. Computersystem 110. Zusätzlich können in dem RAM weitere Daten gespeichert werden, welche beispielsweise spezifizieren, auf welche Adressen in dem Flash 104 die von dem Computersystem 110 empfangenen kryptographischen Programminstruktionen 128 zu speichern sind.

Das Chipkartenbetriebssystem des Sicherheitsmoduls 100 startet dann beispielsweise durch einen entsprechenden Programmaufruf die initialen kryptographischen Programminstruktionen 106. Zwischen dem Sicherheitsmodul 100 und dem Computersystem 110 wird dann ein gesicherter Kommunikationskanal aufgebaut, beispielsweise nach einem sogenannten Secure-Messaging-Verfahren. Hierzu kann beispielsweise ein zuvor zwischen dem Sicherheitsmodul 100 und dem Computersystem 110 vereinbarte Sitzungsschlüssel verwendet werden.

Alternativ oder zusätzlich kann das Sicherheitsmodul 100 den Sitzungsschlüssel verwenden, um das Computersystem 110 zu authentifizieren, indem es prüft, ob das Computersystem 110 Zugriff auf den korrekten Sitzungsschlüssel hat, beispielsweise mittels eines Challenge-Response-Verfahrens. Alternativ kann eine solche separate Prüfung entfallen, da nur ein valider Sitzungsschlüssel einen Empfang der kryptographischen Programminstruktionen 128 ermöglicht. Diese Prüfung ist daher der Übertragung der kryptographischen Programminstruktionen 128 über den gesicherten Kanal inhärent. Um die Sicherheit des Nachladevorgangs auch für die Zukunft sicherzustellen wird der Sitzungsschlüssel von den initialen Schlüsseln 112 und/oder 113 abgeleitet oder die initialen Schlüssel 112, 113 werden direkt als Sitzungsschlüssels verwendet.

Das Computersystem 110 sendet dann das Update 152, d.h. die kryptographischen Programminstruktionen 128, die gegebenenfalls mit dem initialen Schlüssel 113 und/oder einem Sitzungsschlüssel verschlüsselt sind, über einen Secure-Messaging-Kanal an das Sicherheitsmodul 100, das die Programminstruktionen 128 entschlüsselt und gegebenenfalls in dem RAM 180 zwischenspeichert und in dem Flash 104 installiert. Dies kann dadurch erfolgen, dass die bisherigen kryptographischen Programminstruktionen 150 in dem Flash 104 durch die neuen kryptographischen Programminstruktionen 128 ganz oder teilweise überschrieben werden oder dadurch, dass die neuen Programminstruktionen 128 zusätzlich in den nichtflüchtigen änderbaren Speicher 104 geschrieben werden.

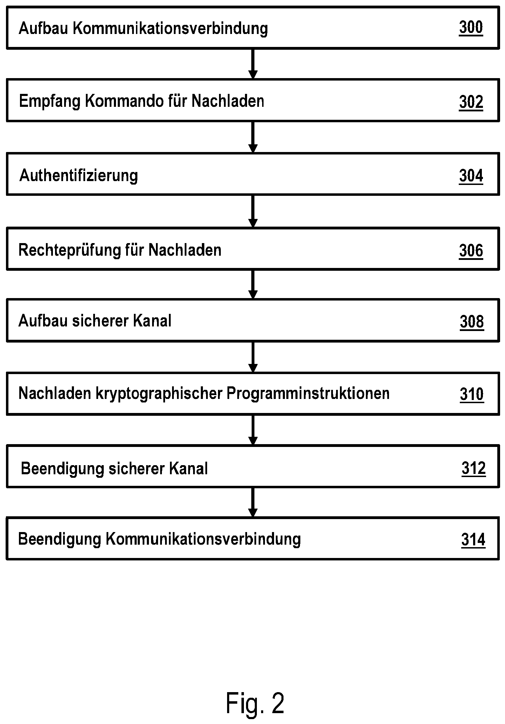

Die Figur 2 zeigt ein Flussdiagramm einer ersten beispielhaften Ausführungsform eines Verfahrens zum Nachladen von kryptographischen Programminstruktionen.

In dem Schritt 300 wird eine Kommunikationsverbindung zwischen dem Sicherheitsmodul 100 und dem Computersystem 110 aufgebaut. In dem Schritt 302 empfängt das Sicherheitsmodul 100 das Kommando 156 von dem Computersystem 110 für das Nachladen von kryptographischen Programminstruktionen.

Daraufhin wird in dem Schritt 304 ein kryptografisches Protokoll zur Authentifizierung des Computersystems 110 und in Schritt 306 zur Prüfung, ob das Computersystem 110 die für das Nachladen der kryptographischen Programminstruktionen notwendigen Zugriffsrechte hat, gestartet, wozu die Daten 158 zwischen dem Computersystem 110 und dem Sicherheitsmodul 100 ausgetauscht werden, um das betreffende kryptografische Protokoll mittels der Authentifizierungsfunktionen 108 und 136 durchzuführen.

Beispielsweise beinhalten die kryptographischen Programminstruktionen 128 einen neuen Algorithmus der in den änderbaren Speicher 104 hinter die kryptographischen Programminstruktionen 150 geschrieben werden sollen. In diesem Fall muss die Startadresse dementsprechend aktualisiert werden, damit beim Aufrufen der neuen kryptographischen Programminstruktionen 128 tatsächlich die neue Version der kryptographischen Programminstruktionen 128 anstelle der vorherigen Version 150 ausgeführt wird.

In dem Schritt 308 wird dann zwischen dem Sicherheitsmodul 100 und der Nachladefunktion 134 ein sicherer Kanal aufgebaut, zum Beispiel mithilfe des Sitzungsschlüssel 160, und es werden in dem Schritt 310 Daten von dem Computersystem 110 geladen, die die neuen Programminstruktionen 128 spezifizieren. Das Laden kann beispielsweise unter Verwendung eines Bootloaders des Sicherheitsmoduls 100 erfolgen.

Bei diesen geladenen Daten kann es sich unmittelbar um die kryptographischen Programminstruktionen 128 selbst handeln oder-je nach Ausführungsform - um Daten, aus denen diese kryptographischen Programminstruktionen 128 durch das Sicherheitsmodul 100 herleitbar sind, indem beispielsweise diese Daten durch logische Operationen mit den bisherigen kryptographischen Programminstruktionen 150 des Sicherheitsmoduls 110 verknüpft werden, sodass sich als Ergebnis dieser logischen Operationen die aktualisierten Programminstruktionen 128 ergeben.

Nach Ausführungsformen ersetzen die neuen Programminstruktionen 128 die bisherigen Programminstruktionen 150, wobei letztere nach oder durch erfolgreiche Installation der neuen Programminstruktionen 128 gelöscht werden. Nach Ausführungsformen erfolgt nach Installation der Programminstruktionen 128 noch eine Funktionsprüfung derselben.

Nach erfolgreicher Beerdigung des Nachladevorgangs werden in den Schritten 312 und 314 der sichere Kanal bzw. die Kommunikationsverbindung beendet.

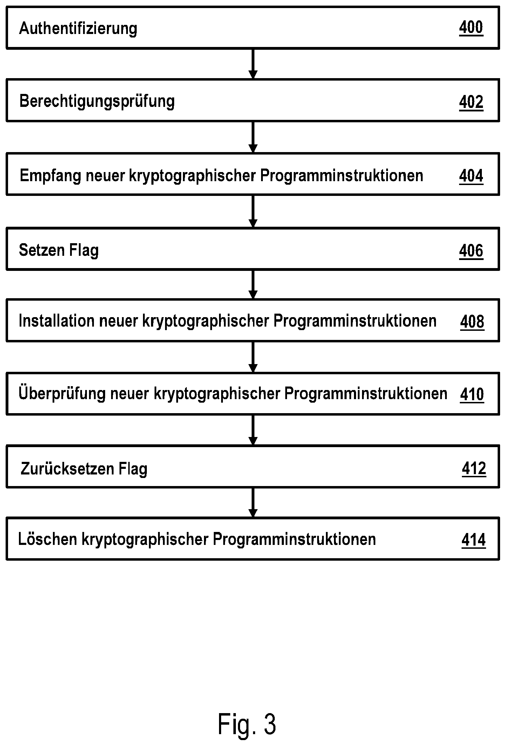

Die Figur 3 zeigt ein Flussdiagramm einer zweiten beispielhaften Ausführungsform eines Verfahrens zum Nachladen von kryptographischen Programminstruktionen.

In dem Schritt 400 erfolgt zunächst eine Authentifizierung des Computersystems 110 gegenüber dem Sicherheitsmodul 100. Neben der Authentifizierung kann in Schritt 402 eine Berechtigungsprüfung erfolgen, nämlich dahingehend, ob das Computersystem 110 die erforderlichen Rechte zur Änderung von kryptographischen Programminstruktionen 150 hat. Dies kann beispielsweise so erfolgen, dass das Computersystem 110 ein Berechtigungszertifikat an das Sicherheitsmodul 100 überträgt, wobei in dem Berechtigungszertifikat die Rechte des Computersystems 110 zur Änderung von kryptographischen Programminstruktionen angegeben sind.

In dem Schritt 404 empfängt das Sicherheitsmodul 100 von dem Computersystem 110 aktualisierte kryptographische Programminstruktionen 128 in dem RAM 180.

In dem Schritt 406 setzt das Chipkartenbetriebssystem 128 ein Flag in dem Flash 104. Ferner kann auch eine Protokolldatei angelegt werden, um die nachfolgenden Schritte zur Änderung der kryptographischen Programminstruktionen zu protokollieren.

In dem Schritt 408 werden die kryptographischen Programminstruktionen 128 im nichtflüchtigen änderbaren Speicher 104 installiert und in Schritt 410 eine Funktionskontrolle durchgeführt. Fällt die Funktionskontrolle positiv aus, ist dadurch der Nachladvorgang abgeschlossen. In dem Schritt 412 wird daher das Flag zurückgesetzt und die Protokolldatei wird gelöscht. In dem Schritt 414 werden schließlich die alten kryptographischen Programminstruktionen 150, welche durch die neuen kryptographischen Programminstruktionen 128 ersetzt wurden, gelöscht.

### Bezugszeichenliste

- 100: Sicherheitsmodul
- 102: ROM
- 104: Flash
- 106: Initiale kryptographische Programminstruktionen
- 108: Authentifizierungsfunktion
- 110: Computersystem
- 112: Initialer kryptographischer Schlüssel
- 113: Kryptographischer Schlüssel
- 116: Schnittstelle
- 118: Speicherfunktion
- 126: Prozessor
- 128: Kryptographische Programminstruktionen
- 130: Speicher
- 132: Schnittstelle
- 134: Nachladeanwendung
- 136: Authentifizierungsfunktion
- 140: Kryptographischer Algorithmus
- 142: Kryptographischer Schlüssel
- 150: Kryptographische Programminstruktionen
- 152: Update
- 154: Prozessor
- 156: Updatekommando
- 158: Authentifizierungsdaten
- 180: RAM
- 182: RAM
- 200: Elektronische System
- 202: Schnittstelle
- 204: Prozessor
- 206: Sensoren
- 208: Speicher

## Patentansprüche

1. Verfahren zum Nachladen erster kryptographischer Programminstruktionen (128) in ein im Wirkbetrieb befindliches Sicherheitsmodul (100) zur kryptographischen Sicherung eines elektronischen Systems (200), welchem das Sicherheitsmodul (140) zugeordnet ist, wobei die ersten kryptographischen Programminstruktionen (128) einen ersten kryptographischen Algorithmus umfassen,
wobei das Sicherheitsmodul (100) einen vorprogrammierten nichtflüchtigen nichtänderbaren Festwertspeicher (102) und einen nichtflüchtigen änderbaren Speicher (104) umfasst, wobei das Sicherheitsmodul (100) ferner initiale kryptographische Programminstruktionen (106) mit einem initialen kryptographischen Algorithmus (108) zur Verwendung eines dem initialen kryptographischen Algorithmus (108) zugeordneten initialen kryptographischen Schlüssel (112) mit einer ersten Schlüssellänge umfasst, wobei der initiale kryptographische Schlüssel (112) in einem geschützten Speicherbereich eines der beiden Speicher (102, 104) gespeichert ist,
wobei der erste kryptographische Algorithmus zur Verwendung von kryptographischen Schlüsseln konfiguriert ist, die dem ersten kryptographischen Algorithmus zugeordneten sind und eine zweite Schlüssellänge aufweisen, wobei die erste Schlüssellänge größer als die zweite Schlüssellänge ist,
wobei das Verfahren umfasst:
• Authentifizierung einer externen Nachladeanwendung (134), wobei das Nachladen der ersten kryptographischen Programminstruktionen (128) mittels Fernwartung über ein elektrisches Energieversorgungsnetz erfolgt,
• nach erfolgreicher Authentifizierung Empfang der ersten kryptographischen Programminstruktionen (128),
• Prüfung der Gültigkeit der ersten kryptographischen Programminstruktionen (128) mittels des initialen kryptographischen Algorithmus (108) und des initialen kryptographischen Schlüssels (112) durch Ausführen der initialen kryptographischen Programminstruktionen (106),
• unter der Voraussetzung, dass die Prüfung die Gültigkeit der ersten kryptographischen Programminstruktionen (128) bestätigt, Installation der ersten kryptographischen Programminstruktionen (128) in dem nichtflüchtigen änderbaren Speicher (104) und Verwendung der ersten kryptographischen Programminstruktionen (128) zur kryptographisch Datensicherung des elektronischen Systems (200), wobei die ersten kryptographischen Programminstruktionen (128) zumindest teilweise zweite in dem nichtflüchtigen änderbaren Speicher (104) gespeicherte kryptographische Programminstruktionen (150) ersetzen, wobei die zweiten kryptographischen Programminstruktionen (150) einen zweiten zur kryptographischen Datensicherung des elektronischen Systems verwendeten kryptographischen Algorithmus (140) umfassen, wobei die zweite Schlüssellänge der dem ersten kryptographischen Algorithmus zugeordneten kryptographischen Schlüssel größer ist als bisherige von dem zweiten kryptographischen Algorithmus (140) verwendete Schlüssellängen,
• Löschen der zu ersetzenden Teile der zweiten kryptographischen Programminstruktionen (150).

2. Verfahren nach Anspruch 1, wobei der initiale kryptographische Schlüssel (112) eine mindestens dreifache Schlüssellänge im Vergleich zu den Schlüssellängen der dem ersten kryptographischen Algorithmus zugeordneten kryptographischen Schlüssel aufweist.

3. Verfahren nach einem der vorhergehenden Ansprüche, wobei es sich bei dem initialen kryptographischen Schlüssel (112) um einen Schlüssel eines symmetrischen Schlüsselpaars handelt oder
wobei es sich bei dem initialen kryptographischen Schlüssel (112) um einen öffentlichen Schlüssel eines asymmetrischen Schlüsselpaars handelt.

4. Verfahren nach einem der vorhergehenden Ansprüche, wobei der Empfang der ersten kryptographischen Programminstruktionen (128) über einen mittels Ende-zu-Ende-Verschlüsselung gesicherten Kommunikationskanal zwischen dem Sicherheitsmodul (100) und der externen Nachladeanwendung (134) erfolgt.

5. Verfahren nach einem der vorhergehenden Ansprüche, wobei der erste kryptographische Algorithmus (128) zur Signaturerstellung und Signaturprüfung, Schlüsselgenerierung, Schlüsselaushandlung, Verschlüsselung und Entschlüsselung von Daten und/oder Zufallszahlengenerierung dient.

6. Verfahren nach einem der vorhergehenden Ansprüche, wobei das Ersetzen ferner umfasst:
• Setzen eines Flags in dem nichtflüchtigen änderbaren Speicher (104), welches anzeigt, dass ein zumindest teilweises Ersetzen der zweiten kryptographischen Programminstruktionen (150) erfolgen soll,
• Zurücksetzen des Flags nach Abschluss der Installation der ersten kryptographischen Programminstruktionen (128), und/oder
wobei das Ersetzen ferner umfasst:
• Protokollieren der einzelnen Schritte des Ersetzens durch Protokolldateien,
• Revidieren der protokollierten Schritte, falls es zu einem Abbruch des Ersetzens ohne Zurücksetzen des Flags kommt, und/oder
wobei das Nachladen ferner umfasst:
Durchführung einer Funktionsprüfung der installierten ersten kryptographischen Programminstruktionen (128), wobei das Löschen der zweiten kryptographischen Programminstruktionen (150) nur unter der Voraussetzung erfolgt, dass die Funktionsprüfung ein Funktionieren der ersten kryptographischen Programminstruktionen (128) ermittelt, wobei im Falle eines ermittelten Nicht-Funktionierens die ersten kryptographischen Programminstruktionen (128) von dem nichtflüchtigen änderbaren Speicher (104) gelöscht werden und das Löschen der zweiten kryptographischen Programminstruktionen (150) unterbleibt.

7. Verfahren nach einem der vorhergehenden Ansprüche, wobei die initialen kryptographischen Programminstruktionen (106) und der initiale kryptographische Schlüssel (112) in dem Festwertspeicher (102) gespeichert sind.

8. Verfahren nach Anspruch 7, wobei es sich bei dem Festwertspeicher (102) um einen ROM-Speicher handelt, in welchem die initialen kryptographischen Programminstruktionen (106) und der initiale kryptographische Schlüssel (112) mittels ROM-Maske festverdrahtet sind.

9. Verfahren nach einem der vorhergehenden Ansprüche, wobei die Prüfung der Gültigkeit der ersten kryptographischen Programminstruktionen (128) anhand einer Signatur erfolgt und/oder
wobei die Prüfung der Gültigkeit der ersten kryptographischen Programminstruktionen (128) umfasst:
• Empfang eines den ersten kryptographischen Programminstruktionen (128) zugeordneten ersten MAC-Werts,
• Berechnung eines zweiten MAC-Werts der ersten kryptographischen Programminstruktionen (128) unter Verwendung des initialen kryptographischen Schlüssels (112),
• Vergleich des ersten und zweiten MAC-Werts, wobei die Bestätigung der Gültigkeit der ersten kryptographischen Programminstruktionen (128) eine Übereinstimmung beider MAC-Werte voraussetzt, und/oder
wobei die ersten kryptographischen Programminstruktionen (128) in verschlüsselter Form empfangen werden, wobei das Verfahren ferner umfasst:
Entschlüsseln der verschlüsselten ersten kryptographischen Programminstruktionen (128) unter Verwendung des initialen kryptographischen Schlüssels (112) .

10. Computerprogrammprodukt, insbesondere ein computerlesbares, nichtflüchtiges Speichermedium, mit ausführbaren Programminstruktionen zur Ausführung eines Verfahrens nach einem der Ansprüche 1 bis 9.

11. Sicherheitsmodul (100), welches dazu konfiguriert ist, ein Verfahren nach einem der Ansprüche 1 bis 9 auszuführen.

12. Elektronisches System (200) mit einem Sicherheitsmodul (100) nach Anspruch 11.

13. Verteiltes System, welches ein elektronisches System (200) nach Anspruch 12 sowie ein Computersystem (110) zur Fernwartung des Sicherheitsmoduls (100) über das elektrisches Energieversorgungsnetz mit der Nachladeanwendung (134) umfasst.

## Claims

1. A method for reloading first cryptographic program instructions (128) in a security module (100) currently in operation for securing by cryptography an electronic system (200) to which the security module (140) is assigned, wherein the first cryptographic program instructions (128) comprise a first cryptographic algorithm,
wherein the security module (100) comprises a preprogrammed non-volatile non-changeable read-only memory (102) and a non-volatile changeable memory (104), wherein the security module (100) also comprises initial cryptographic program instructions (106) with an initial cryptographic algorithm (108) for use of an initial cryptographic key (112) assigned to the initial cryptographic algorithm (108) and having a first key length, wherein the initial cryptographic key (112) is stored in a protected memory area of one of the two memories (102, 104),
wherein the first cryptographic algorithm is configured for use of cryptographic keys which are assigned to the first cryptographic algorithm and have a second key length, wherein the first key length is greater than the second key length,
wherein the method comprises the steps of:
• authenticating an external reload application (134), wherein the first cryptographic program instructions (128) are reloaded by remote maintenance via an electrical power supply network,
• following successful authentication, receiving the first cryptographic program instructions (128),
• checking the validity of the first cryptographic program instructions (128) by means of the initial cryptographic algorithm (108) and the initial cryptographic key (112) by executing the initial cryptographic program instructions (106),
• on the condition that the check confirms the validity of the first cryptographic program instructions (128), installing the first cryptographic program instructions (128) in the non-volatile changeable memory (104) and using the first cryptographic program instructions (128) to provide cryptographic data security for the electronic system (200), wherein the first cryptographic program instructions (128) at least partially replace second cryptographic program instructions (150) stored in the non-volatile changeable memory (104), wherein the second cryptographic program instructions (150) comprise a second cryptographic algorithm (140) used to provide the cryptographic data security for the electronic system, wherein the second key length of the cryptographic key assigned to the first cryptographic algorithm is greater than previous key lengths used by the second cryptographic algorithm (140),
• deleting the parts of the second cryptographic program instructions (150) that are to be replaced.

2. The method according to claim 1, wherein the initial cryptographic key (112) has a key length at least three times as long as the key lengths of the cryptographic keys assigned to the first cryptographic algorithm.

3. The method according to either one of the preceding claims, wherein the initial cryptographic key (112) is a key of a symmetric key pair, or
wherein the initial cryptographic key (112) is a public key of an asymmetric key pair.

4. The method according to any one of the preceding claims, wherein the first cryptographic program instructions (128) are received via a communications channel between the security module (100) and the external reload application (134), which communications channel is secured by means of end-to-end encryption.

5. The method according to any one of the preceding claims, wherein the first cryptographic algorithm (128) is used for signature creation and signature checking, key generation, key negotiation, encryption and decryption of data and/or random number generation.

6. The method according to any one of the preceding claims, wherein the replacement also comprises:
• setting a flag in the non-volatile changeable memory (104), which flag indicates that at least some of the second cryptographic program instructions (150) should be replaced,
• resetting the flag following completion of the installation of the first cryptographic program instructions (128), and/or
wherein the replacement also comprises the steps of:
• logging the individual steps of the replacement by way of log files,
• revising the logged steps if the replacement is aborted without resetting of the flag, and/or
wherein the reload further comprises the step of:
carrying out a function check of the installed first cryptographic program instructions (128), wherein the second cryptographic program instructions (150) are deleted only on the condition that the function check determines that the first cryptographic program instructions (128) are functioning, wherein, if it is determined that the first cryptographic program instructions (128) are not functioning, said program instructions are deleted from the non-volatile changeable memory (104), and the second cryptographic program instructions (150) are not deleted.

7. The method according to any one of the preceding claims, wherein the initial cryptographic program instructions (106) and the initial cryptographic key (112) are stored in the read-only memory (102).

8. The method according to claim 7, wherein the read-only memory (102) is a ROM memory, in which the initial cryptographic program instructions (106) and the initial cryptographic key (112) are wired by means of a ROM mask.

9. The method according to any one of the preceding claims, wherein the validity of the first cryptographic program instructions (128) is checked on the basis of a signature, and/or
wherein the checking of the validity of the first cryptographic program instructions (128) comprises:
• receiving a first MAC value assigned to the first cryptographic program instructions (128),
• calculating a second MAC value of the first cryptographic program instructions (128) with use of the initial cryptographic key (112),
• comparing the first and second MAC value, wherein the confirmation of the validity of the first cryptographic program instructions (128) presupposes that both MAC values match, and/or
wherein the first cryptographic program instructions (128) are received in encrypted form, wherein the method also comprises:
decrypting the encrypted first cryptographic program instructions (128) with use of the initial cryptographic key (112).

10. A computer program product, in particular a computer-readable, non-volatile storage medium, with executable program instructions for carrying out a method according to any one of claims 1 to 9.

11. A security module (100), which is configured to carry out a method according to any one of claims 1 to 9.

12. An electronic system (200) with a security module (100) according to claim 11.

13. A distributed system which comprises an electronic system (200) according to claim 12 and a computer system (110) for remote maintenance of the security module (100) via the electrical power supply network using the reload application (134).

## Revendications

1. Procédé de rechargement de premières instructions de programme cryptographiques (128) dans un module de sécurité (100) se trouvant en cours de fonctionnement pour la sécurisation cryptographique d'un système électronique (200), auquel le module de sécurité (140) est associé, dans lequel les premières instructions de programme cryptographiques (128) comprennent un premier algorithme cryptographique,
dans lequel le module de sécurité (100) comprend une mémoire morte (102) préprogrammée, non volatile et non modifiable et une mémoire (104) non volatile modifiable, dans lequel le module de sécurité (100) comprend en outre des instructions de programme cryptographiques initiales (106) avec un algorithme cryptographique initial (108) pour l'emploi d'une clé cryptographique initiale (112) associée à l'algorithme cryptographique initial (108) avec une première longueur de clé, dans lequel la clé cryptographique initiale (112) est enregistrée dans une zone de mémoire sécurisée d'une des deux mémoires (102, 104),
dans lequel le premier algorithme cryptographique est conçu pour l'emploi de clés cryptographiques qui sont associées au premier algorithme cryptographique et présentent une deuxième longueur de clé, où la première longueur de clé est supérieure à la deuxième longueur de clé,
où le procédé comprend :
• l'authentification d'une application de rechargement (134) externe, où le rechargement des premières instructions de programme cryptographiques (128) a lieu au moyen d'une télémaintenance par le biais d'un réseau d'alimentation en énergie électrique,
• après l'authentification réussie, la réception des premières instructions de programme cryptographiques (128),
• la vérification de la validité des premières instructions de programme cryptographiques (128) au moyen de l'algorithme cryptographique initial (108) et de la clé cryptographique initiale (112) par l'exécution des instructions de programme cryptographiques initiales (106),
• à condition que la vérification de la validité des premières instructions de programme cryptographiques (128) le confirme, l'installation des premières instructions de programme cryptographiques (128) dans la mémoire (104) non volatile modifiable et l'emploi des premières instructions de programme cryptographiques (128) pour la sécurisation de données de manière cryptographique du système électronique (200), où les premières instructions de programme cryptographiques (128) remplacent au moins partiellement des deuxièmes instructions de programme cryptographiques (150) enregistrées dans la mémoire (104) non volatile modifiable, où les deuxièmes instructions de programme cryptographiques (150) comprennent un deuxième algorithme cryptographique (140) employé pour la sécurisation de données cryptographique du système électronique, où la deuxième longueur de clé de la clé cryptographique associée au premier algorithme cryptographique est plus importante que les longueurs des clés employées jusqu'à présent par le deuxième algorithme cryptographique (140),
• l'effacement des parties à remplacer des deuxièmes instructions de programme cryptographiques (150).

2. Procédé selon la revendication 1, dans lequel la clé cryptographique initiale (112) présente une longueur de clé au moins trois fois égale par comparaison aux longueurs de clés des clés cryptographiques associées au premier algorithme cryptographique.

3. Procédé selon l'une des revendications précédentes, dans lequel il s'agit, dans le cas de la clé cryptographique initiale (112), d'une clé d'une paire de clés symétrique, ou
dans lequel il s'agit, dans le cas de la clé cryptographique initiale (112), d'une clé publique d'une paire de clés asymétrique.

4. Procédé selon l'une des revendications précédentes, dans lequel la réception des premières instructions de programme cryptographiques (128) a lieu par le biais d'un canal de communication sécurisé au moyen d'un chiffrement de bout en bout entre le module de sécurité (100) et l'application de rechargement (134) externe.

5. Procédé selon l'une des revendications précédentes, dans lequel le premier algorithme cryptographique (128) sert à l'établissement de signatures et à la vérification de signatures, à la génération de clés, à la négociation de clés, au chiffrement et au déchiffrement de données et/ou à la génération de nombres aléatoires.

6. Procédé selon l'une des revendications précédentes, dans lequel le remplacement comprend en outre :
• la mise en place d'un drapeau dans la mémoire (104) non volatile et modifiable, lequel indique qu'un remplacement au moins partiel des deuxièmes instructions de programme cryptographiques (150) doit avoir lieu,
• la réinitialisation par défaut du drapeau après la fin de l'installation des premières instructions de programme cryptographiques (128), et/ou dans lequel le remplacement comprend en outre :
• l'instrumentation des étapes individuelles du remplacement par des données de protocole,
• la révision des étapes instrumentalisées dans le cas où il se produirait une annulation du remplacement sans réinitialisation par défaut du drapeau, et/ou dans lequel le rechargement comprend en outre :
l'exécution d'une vérification fonctionnelle des premières instructions de programme cryptographiques (128) installées, où l'effacement des deuxièmes instructions de programme cryptographiques (150) n'a lieu qu'à la condition que la vérification fonctionnelle détermine un fonctionnement des premières instructions de programme cryptographiques (128), où, dans le cas d'un non fonctionnement déterminé, les premières instructions de programme cryptographiques (128) sont effacées de la mémoire (104) non volatile modifiable et l'effacement des deuxièmes instructions de programmes cryptographiques (150) n'a pas lieu.

7. Procédé selon l'une des revendications précédentes, dans lequel les instructions de programme cryptographiques initiales (106) et la clé cryptographique initiale (112) sont enregistrées dans la mémoire morte (102).

8. Procédé selon la revendication 7, dans lequel, dans le cas de la mémoire morte (102), il s'agit d'une mémoire ROM, dans laquelle les instructions de programme cryptographiques initiales (106) et la clé cryptographique initiale (112) sont liées à demeure au moyen d'un masque ROM.

9. Procédé selon l'une des revendications précédentes, dans lequel la vérification de la validité des premières instructions de programme cryptographiques (128) a lieu à l'aide d'une signature, et/ou
dans lequel la vérification de la validité des premières instructions de programme (128) comprend :
• la réception d'une première valeur MAC associée aux premières instructions de programme cryptographiques (128),
• le calcul d'une deuxième valeur MAC des premières instructions de programme cryptographiques (128) moyennant l'emploi de la clé cryptographique initiale (112),
• la comparaison de la première et de la deuxième valeur MAC, où la confirmation de la validité des premières instructions de programme cryptographiques (128) est conditionnée à une concordance des deux valeurs MAC, et/ou
dans lequel les premières instructions de programme cryptographiques (128) sont réceptionnées sous forme chiffrée, où le procédé comprend en outre :
le déchiffrement des premières instructions de programme cryptographiques (128) chiffrées moyennant l'emploi de la clé cryptographique initiale (112).

10. Produit-programme informatique, en particulier, support de stockage lisible par ordinateur, non volatil, pourvu d'instructions de programme permettant l'exécution d'un procédé selon l'une des revendications 1 à 9.

11. Module de sécurité (100), lequel est conçu pour exécuter un procédé selon l'une des revendications 1 à 9.

12. Système électronique (200) pourvu d'un module de sécurité (100) selon la revendication 11.

13. Système partagé, lequel comprend un système électronique (200) selon la revendication 12 ainsi qu'un système informatique (110) pour la télémaintenance du module de sécurité (100) par le biais du réseau d'alimentation en énergie électrique avec l'application de rechargement (134).
